# EUROPEAN PATENT APPLICATION

(11) **EP 3 628 703 A1**
(43) Date of publication of application: **01.04.2020**
(21) Application number: 19197974.9
(22) Date of filing: 18.09.2019
(51) Int. Cl.: C08L 23/08

(54) **HALOGEN-FREE FLAME-RETARDANT RESIN COMPOSITION, INSULATED WIRE, AND CABLE**

(30) Priority: 25.09.2018 JP 2018178833
(71) Applicant: Hitachi Metals, Ltd., Minato-ku Tokyo 108-8224 (JP)
(72) Inventor: KIBE, Tamotsu, Tokyo, 108-8224 (JP); KAJIYAMA, Motoharu, Tokyo, 108-8224 (JP); HASHIMOTO, Mitsuru, Tokyo, 108-8224 (JP); IWASAKI, Makoto, Tokyo, 108-8224 (JP)
(74) Representative: Seemann & Partner Patentanwälte mbB

(57) **Abstract**

A halogen-free flame-retardant resin composition includes a base polymer; and 150 parts by mass or more and 250 parts by mass or less of a metal hydroxide with respect to 100 parts by mass of the base polymer. The base polymer includes (a) an ethylene-vinyl acetate copolymer having a vinyl acetate content of 60% by mass or more; and (b) a polyolefin polymer having a melting point of 85°C or higher. A ratio of a total mass of (a) and (b) with respect to a whole mass of the base polymer is 80% by mass or more.

## Description

### CROSS-REFERENCE TO RELATED APPLICATIONS

This application claims the benefit of Japanese Patent Application No. 2018-178833 filed on September 25, 2018 with the Japan Patent Office, the disclosure of which is incorporated herein by reference.

### BACKGROUND

The present disclosure relates to a halogen-free flame-retardant resin composition, an insulated wire, and a cable.

Insulating layers of insulated wires and sheaths of cables are composed, in some cases, of a flame-retardant resin composition containing a flame retardant. A halogen material is known as a flame retardant. In recent years, global increase in activities for environmental preservation has rapidly promoted the spread of halogen-free materials. Japanese Unexamined Patent Application Publication No. 2010-97881 discloses an insulated wire in which a halogen-free material, such as a metal hydroxide, is used as a flame retardant.

### SUMMARY

Insulating layers of insulated wires and sheaths of cables are required to have, in some cases, good low-temperature properties and fuel resistance in addition to flame retardancy.

It has been difficult for a flame-retardant resin composition containing a conventional halogen-free material to provide the insulating layers and the sheaths with both flame retardancy, and low-temperature properties and fuel resistance. For example, the metal hydroxide as a halogen-free material has lower flame retardancy than a halogen material. Thus, in order to increase flame retardancy of the insulating layers and the sheaths, it is necessary to increase an amount of the metal hydroxide blended in the flame-retardant resin composition. However, a larger amount of the metal hydroxide blended leads to deterioration of elongation properties, low-temperature properties, and the like of the insulating layers and the sheaths.

In one aspect of the present disclosure, it is desirable to provide a halogen-free flame-retardant resin composition, an insulated wire, and a cable, each having good flame retardancy, low-temperature properties, and fuel resistance.

A halogen-free flame-retardant resin composition of one aspect of the present disclosure comprises a base polymer; and 150 parts by mass or more and 250 parts by mass or less of a metal hydroxide with respect to 100 parts by mass of the base polymer. The base polymer comprises (a) an ethylene-vinyl acetate copolymer having a vinyl acetate content of 60% by mass or more; and (b) a polyolefin polymer having a melting point of 85°C or higher. A ratio of a total mass of (a) and (b) with respect to a whole mass of the base polymer is 80% by mass or more.

According to the halogen-free flame-retardant resin composition of one aspect of the present disclosure, a halogen-free flame-retardant resin composition having good flame retardancy, fuel resistance, and low-temperature properties can be obtained.

According to an insulated wire of one aspect of the present disclosure, an insulated wire having good flame retardancy, fuel resistance, and low-temperature properties can be obtained.

According to a cable of one aspect of the present disclosure, a cable having good flame retardancy, fuel resistance, and low-temperature properties can be obtained.

### BRIEF DESCRIPTION OF THE DRAWINGS

Example embodiments of the present disclosure will be described below with reference to the accompanying drawings, in which:
FIG. 1 is a cross-sectional view showing a cross section of an insulated wire taken perpendicular to a longitudinal axis thereof;
FIG. 2 is a cross-sectional view showing a cross section of an insulated wire taken perpendicular to a longitudinal axis thereof; and
FIG. 3 is a cross-sectional view showing a cross section of a cable taken perpendicular to a longitudinal axis thereof.

### DETAILED DESCRIPTION OF EXEMPLARY EMBODIMENTS

### 1. Halogen-free Flame-retardant Resin Composition

A halogen-free flame-retardant resin composition of the present disclosure is a flame-retardant resin composition containing no halogen material as a flame retardant. The halogen-free flame-retardant resin composition comprises a base polymer. The base polymer comprises (a) an ethylene-vinyl acetate copolymer having a vinyl acetate content of 60% by mass or more (hereinafter referred to as a component (a)); and (b) a polyolefin polymer having a melting point of 85°C or higher (hereinafter referred to as a component (b)). A ratio of the total mass of the component (a) and the component (b) with respect to the whole mass of the base polymer is 80% by mass or more. Such a constitution results in obtainment of a halogen-free flame-retardant resin composition having good flame retardancy, fuel resistance, and low-temperature properties.

In the component (a), the vinyl acetate content (hereinafter referred to as a VA amount) is preferably 60% by mass or more and 80% by mass or less, and more preferably 60% by mass. The less the VA amount is within the range of 60% by mass or more, the more improved is the low-temperature properties of the halogen-free flame-retardant resin composition. The VA amount means a ratio of the mass of vinyl acetate with respect to the whole mass of the ethylene-vinyl acetate copolymer.

Examples of the component (b) may include low density polyethylene (LDPE), linear low density polyethylene (LLDPE), linear very low density polyethylene (VLDPE), high density polyethylene (HDPE), polypropylene (PP), ethylene-ethyl acrylate copolymer (EEA), and ethylene-vinyl acetate copolymer (EVA). The component (b) is preferably EVA. When the component (b) is EVA, excellent flame retardancy is obtained.

The less crystallinity of EVA as the component (b) is, the less likely to deteriorate are physical properties, such as elongation, of the halogen-free flame-retardant resin composition, even when a filler is added to the halogen-free flame-retardant resin composition. The VA amount of EVA as the component (b) is preferably around 17% by mass. The melting point of EVA as the component (b) is preferably around 89°C.

A mass ratio of the component (a) to the component (b) is not limited in particular, but is preferably in a range of 1: 2 to 2: 1, and is more preferably in a range of 4: 6 to 6: 4. When the mass ratio of the component (a) to the component (b) is within the aforementioned ranges, excellent fuel resistance is obtained.

The ratio of the total mass of the component (a) and the component (b) with respect to the whole mass of the base polymer is 80% by mass or more. This results in excellent fuel resistance.

The base polymer may further comprise, for example, (c) an acid-modified polyolefin having a glass transition temperature of -55°C or lower (hereinafter referred to as a component (c)). When the base polymer further comprises the component (c), the low-temperature properties of the halogen-free flame-retardant resin composition are more excellent.

The component (c) is obtained, for example, by grafting an acid onto a polyolefin or by copolymerizing an acid with a polyolefin. Examples of the polyolefin may include natural rubber, butyl rubber, ethylene-propylene rubber, ethylene-α-olefin copolymer, styrene-butadiene rubber, nitrile rubber, acrylic rubber, silicone rubber, urethane rubber, polyethylene, polypropylene, ethylene-vinyl acetate copolymer, polyvinyl acetate, ethylene ethyl acrylate copolymer, ethylene acrylic ester copolymer, polyurethane, very low density polyethylene, ethylene-methyl acrylate copolymer, ethylene-ethyl acrylate copolymer, ethylene-butene-1 copolymer, ethylene-hexene-1 copolymer, and ethylene-octene-1 copolymer. Preferred polyolefins are ethylene-propylene rubber, ethylene-α-olefin copolymer, and ethylene ethyl acrylate copolymer.

Examples of the acid may include maleic acid, maleic anhydride, and fumaric acid. The base polymer may comprise only one kind of the component (c), or may comprise two or more kinds thereof. The glass transition temperature means a glass transition temperature measured by DSC method.

A ratio of the mass of the component (c) with respect to the total mass of the component (a), the component (b), and the component (c) is 1% by mass or more and 20% by mass or less. This results in excellent low-temperature properties.

The base polymer may further comprise a polymer other than the components (a) to (c) (hereinafter referred to as another polymer). Examples of such another polymer may include low density polyethylene (LDPE), linear low density polyethylene (LLDPE), linear very low density polyethylene (VLDPE), high density polyethylene (HDPE), polypropylene (PP), ethylene-ethyl acrylate copolymer (EEA), ethylene-vinyl acetate copolymer (EVA), ethylene-styrene copolymer, ethylene-glycidyl methacrylate copolymer, ethylene-butene-1 copolymer, ethylene-butene-hexene terpolymer, ethylene-propylene-diene terpolymer (EPDM), ethylene-octene copolymer (EOR), ethylene copolymerized polypropylene, ethylene-propylene copolymer (EPR), poly-4-methyl-pentene-1, maleic acid grafted low density polyethylene, hydrogenated styrene-butadiene copolymer (H-SBR), maleic acid grafted linear low density polyethylene, copolymer of ethylene and α-olefin having 4 to 20 carbon atoms, ethylene-styrene copolymer, maleic acid grafted ethylene-methyl acrylate copolymer, maleic acid grafted ethylene-vinyl acetate copolymer, ethylene-maleic anhydride copolymer, ethylene-ethyl acrylate-maleic anhydride terpolymer, and ethylene-propylene-butene-1 terpolymer having butene-1 as a main component.

The halogen-free flame-retardant resin composition comprises a metal hydroxide. Examples of the metal hydroxide may include magnesium hydroxide, aluminum hydroxide, and calcium hydroxide. A preferred metal hydroxide is magnesium hydroxide. The halogen-free flame-retardant resin composition may comprise only one kind of the metal hydroxide, or may comprise two or more kinds thereof. The metal hydroxide functions as a flame retardant.

The metal hydroxide may be surface-treated. Such surface treatment may be performed using, for example, a silane coupling agent, a titanate coupling agent, fatty acid, fatty acid metal salt, or the like. Examples of the fatty acid may include stearic acid. Examples of the fatty acid metal salt may include calcium stearate.

The halogen-free flame-retardant resin composition comprises 150 parts by mass or more and 250 parts by mass or less of the metal hydroxide with respect to 100 parts by mass of the base polymer. The content of the metal hydroxide being 150 parts by mass or more with respect to 100 parts by mass of the base polymer results in high flame retardancy of the halogen-free flame-retardant resin composition. The content of the metal hydroxide being 250 parts by mass or less with respect to 100 parts by mass of the base polymer results in high elongation properties and the like of the halogen-free flame-retardant resin composition.

The halogen-free flame-retardant resin composition may be crosslinked. Examples of a crosslinking method may include an irradiation crosslinking method and a chemical crosslinking method. The irradiation crosslinking method is a method of crosslinking by irradiating an article formed of the halogen-free flame-retardant resin composition with electron rays, radial rays, or the like. In carrying out the irradiation crosslinking method, a crosslinking aid is blended in the halogen-free flame-retardant resin composition in advance.

The chemical crosslinking method is a method of crosslinking by heating an article formed of the halogen-free flame-retardant resin composition. In carrying out the chemical crosslinking method, a crosslinking agent is blended in the halogen-free flame-retardant resin composition in advance.

Examples of the crosslinking agent may include an organic peroxide. Examples of the organic peroxide may include 1,3-bis(2-t-butylperoxyisopropyl)benzene and dicumyl peroxide (DCP).

The halogen-free flame-retardant resin composition may comprise an additive where appropriate. Examples of the additive may include an antioxidant, a metal deactivator, a flame retardant other than metal hydroxide, a crosslinking agent, a crosslinking aid, a lubricant, an inorganic filler, a compatibilizer, a stabilizer, a carbon black, and a colorant.

Examples of the antioxidant may include a phenol-based antioxidant, a sulfur-based antioxidant, an amine-based antioxidant, and a phosphorus-based antioxidant. Examples of the phenol-based antioxidant may include dibutylhydroxytoluene (BHT), pentaerythritol tetrakis[3-(3,5-di-t-butyl-4-hydroxyphenyl)propionate], 1,3,5-tris(3,5-di-t-butyl-4-hydroxy-benzyl)-S-triazine-2,4,6-(1H,3H,5H)trione, and thiodiethylene bis[3-(3,5-di-tert-butyl-4-hydroxyphenyl)propionate]. A preferred phenol-based antioxidant is pentaerythritol tetrakis[3-(3,5-di-t-butyl-4-hydroxyphenyl)propionate].

Examples of the sulfur-based antioxidant may include didodecyl 3,3'-thiodipropionate, ditridecyl 3,3'-thiodipropionate, dioctadecyl 3,3'-thiodipropionate, and tetrakis[methylene-3-(dodecylthio)propionate]methane. A preferred sulfur-based antioxidant is tetrakis[methylene-3-(dodecylthio)propionate]methane. The halogen-free flame-retardant resin composition may comprise only one kind of the antioxidant, or may comprise two or more kinds thereof.

The metal deactivator has an effect of stabilizing metal ions by chelate formation to reduce oxidation degradation. Examples of the metal deactivator may include N-(2H-1,2,4-triazol-5-yl)salicylamide, dodecanedioic acid bis[N2-(2-hydroxybenzoyl)hydrazide], and 2',3-bis[[3-[3,5-di-tert-butyl-4-hydroxyphenyl]propionyl]]propionohydrazide. A preferred metal deactivator is 2',3-bis[[3-[3,5-di-tert-butyl-4-hydroxyphenyl]propionyl]]propionohydrazide.

Examples of the flame retardant other than metal hydroxide may include: amorphous silica; zinc compounds such as zinc stannate, zinc hydroxystannate, zinc borate, and zinc oxide; boric acid compounds such as calcium borate, barium borate, and barium metaborate; phosphorous-based flame retardants; nitrogen-based flame retardants such as melamine cyanurate; and intumescent flame retardants comprising a mixture of a component that foams during combustion and a component that solidifies during combustion.

Examples of preferred crosslinking aids may include trimethylolpropane trimethacrylate (TMPT) and triallyl isocyanurate (TAIC).

Examples of the lubricant may include fatty acids, fatty acid metal salts, and fatty acid amides, and specific examples may include zinc stearate. The halogen-free flame-retardant resin composition may comprise only one kind of the lubricant, or may comprise two or more kinds thereof.

Examples of the carbon black may include rubber carbon black (N900-N100: ASTM D 1765-01). Examples of the colorant may include color master batches for halogen-free products.

The halogen-free flame-retardant resin composition may comprise the inorganic filler in addition to the base polymer, to the extent not impairing insulation performance greatly. Examples of the inorganic filler may include silicates, oxide, carbonate, and hydroxide.

Examples of the silicates may include kaolinite, kaolin clay, calcined clay, talc, mica, wollastonite, and pyrophyllite. Examples of the oxide may include silica, alumina, zinc oxide, titanium oxide, calcium oxide, and magnesium oxide. Examples of the carbonate may include calcium carbonate, zinc carbonate, and barium carbonate. Examples of the hydroxide may include calcium hydroxide, magnesium hydroxide, and aluminum hydroxide.

The calcined clay and talc having hydrophobicity exhibit high electrical properties. Moreover, since the calcined clay and talc having hydrophobicity contain no carbon, generation of carbon monoxide is less likely to occur. Thus, the calcined clay and talc having hydrophobicity are preferred as the inorganic filler.

The inorganic filler may be surface-treated with silane or the like. In this case, adhesion between the inorganic filler and the base polymer is strengthened. In addition, the insulation performance of the halogen-free flame-retardant resin composition is further improved. The content of the inorganic filler in the halogen-free flame-retardant resin composition is preferably 100 parts by mass or less with respect to 100 parts by mass of the base polymer. The halogen-free flame-retardant resin composition may comprise only one kind of the inorganic filler, or may comprise two or more kinds thereof.

### 2. Insulated Wire

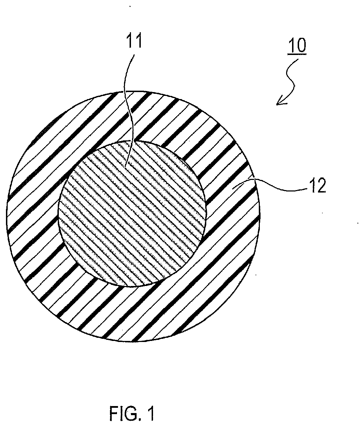

An insulated wire of the present disclosure has, for example, a structure shown in FIG. 1. An insulated wire 10 comprises a conductor 11 and an insulating layer 12. The insulating layer 12 covers the conductor 11.

The conductor 11 is configured with, for example, a commonly used metal wire. Examples of the metal wire may include a copper wire, a copper alloy wire, an aluminum wire, a gold wire, and a silver wire. For example, the metal wire comprises, on an outer periphery thereof, a metal plating layer of tin, nickel, or the like. The conductor 11 may be, for example, a stranded wire.

The insulating layer 12 comprises the halogen-free flame-retardant resin composition of the present disclosure. For example, the insulating layer 12 has a single-layer structure as shown in FIG. 1.

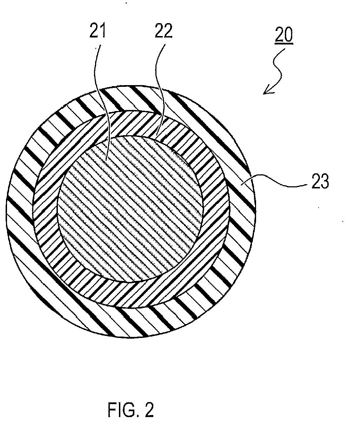

An insulated wire of the present disclosure has, for example, a structure shown in FIG. 2. An insulated wire 20 comprises a conductor 21, an inner insulating layer 22, and an outer insulating layer 23. The inner insulating layer 22 covers the conductor 21. The outer insulating layer 23 covers the inner insulating layer 22. The inner insulating layer 22 and the outer insulating layer 23 correspond to insulating layers. The insulated wire 20 comprises multiple insulating layers (i.e., has a multi-layer structure). The outer insulating layer 23 is an outermost insulating layer. The conductor 21 is similar to the conductor 11. The outer insulating layer 23 comprises the halogen-free flame-retardant resin composition of the present disclosure.

The inner insulating layer 22 comprises, for example, a polyolefin polymer. Examples of the polyolefin polymer may include low density polyethylene, ethylene-vinyl acetate copolymer, ethylene-ethyl acrylate copolymer, ethylene-methyl acrylate copolymer, ethylene-glycidyl methacrylate copolymer, and maleic anhydride polyolefin. The inner insulating layer 22 may comprises only one kind of the polyolefin polymer, or may comprise two or more kinds thereof.

The inner insulating layer 22 comprises, for example, a rubber material. Examples of the rubber material may include ethylene-propylene copolymer rubber (EPR), ethylene-propylene-diene terpolymer rubber (EPDM), acrylonitrile-butadiene rubber (NBR), hydrogenated NBR (HNBR), acrylic rubber, ethylene-acrylic ester copolymer rubber, ethylene octene copolymer rubber (EOR), ethylene-vinyl acetate copolymer rubber, ethylene-butene-1 copolymer rubber (EBR), butadiene-styrene copolymer rubber (SBR), isobutylene-isoprene copolymer rubber (IIR), block copolymer rubber having a polystyrene block, urethane rubber, and phosphazene rubber. The inner insulating layer 22 may comprise only one kind of the rubber material, or may comprise two or more kinds thereof.

The inner insulating layer 22 may comprise, for example, another insulating material. The insulated wire 20 may comprise a separator, a braid, or the like where necessary.

The insulated wire 20 may comprise three or more insulating layers. In such a case, for example, one or more insulating layers including the outermost insulating layer comprises the halogen-free flame-retardant resin composition of the present disclosure. Further, for example, one or more insulating layers excluding the outermost insulating layer each have a composition similar to that of the inner insulating layer 22.

### 3. Cable

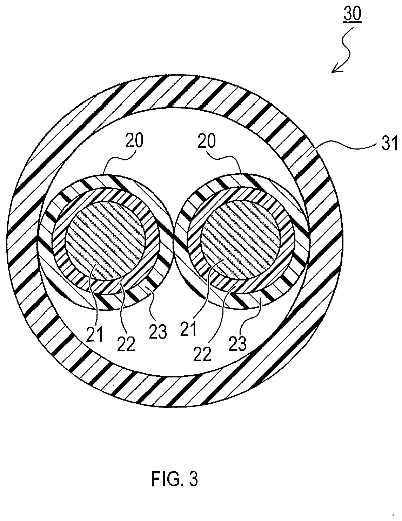

A cable of the present disclosure has, for example, a structure shown in FIG. 3. A cable 30 comprises the two insulated wires 20 and a sheath 31. Each insulated wire 20 is that shown in FIG. 2. The sheath 31 covers the two insulated wires 20. The sheath 31 comprises the halogen-free flame-retardant resin composition of the present disclosure. The sheath 31 is a flame-retardant sheath. The number of the insulated wires 20 provided in the cable 30 may be other than two. The cable 30 may comprise the insulated wire 10 shown in FIG. 1.

### 4. Examples

(4-1) Preparation of Halogen-free Flame-retardant Resin Compositions Halogen-free flame-retardant resin compositions of Examples 1 to 10 having compositions shown in Table 1 were prepared. Further, halogen-free flame-retardant resin compositions of Comparative Examples 1 to 7 having compositions shown in Table 2 were prepared.

**[Table 1]**

| | Material name | Composition | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Polymer | EVA¹⁾ | Levapren 600 | 50 | 40 | 40 | 40 | 50 | | 40 | 30 | 40 | 40 |
| | EVA²⁾ | Levapren 800 | | | | | | 50 | | | | |
| | EVA³⁾ | V5274 | 50 | 45 | 45 | 45 | 30 | 30 | 45 | 50 | | |
| | EVA⁴⁾ | P1007 | | | | | | | | | 45 | |
| | EEA⁵⁾ | A1150 | | | | | | | | | | 45 |
| | Acid-modified polyolefin⁶⁾ | Maleic acid-modified polymer | | 15 | 15 | 15 | 20 | 20 | 15 | 15 | 15 | 15 |
| Flame retardant | Magnesium hydroxide ⁷⁾ | Magseeds S4 | 150 | 150 | 200 | 250 | 180 | 180 | 180 | 180 | 180 | 180 |
| Antoxidane⁸⁾ | | AO-18 | 1 | 1 | 1 | 1 | 1 | 1 | 1 | 1 | 1 | 1 |
| Colorant | Carbon black⁹⁾ | FT carbon | 2 | 2 | 2 | 2 | 2 | 2 | 2 | 2 | 2 | 2 |
| Lublicant¹⁰⁾ | | zinc stearate | 1 | 1 | 1 | 1 | 1 | 1 | 1 | 1 | 1 | 1 |
| Total | | | 254 | 254 | 304 | 354 | 284 | 284 | 284 | 279 | 284 | 284 |
| | | | | | | | | | | | | |
| Electric wire characteristics | Initial tensile test | Tensile strength (Mpa) | 10.3 | 12.5 | 10.7 | 10.4 | 11.7 | 10.4 | 10.5 | 12.9 | 13.6 | 10.7 |
| | | | ○ | ○ | ○ | ○ | ○ | ○ | ○ | ○ | ○ | ○ |
| | | Elongation (%) | 310 | 230 | 220 | 160 | 210 | 200 | 230 | 170 | 170 | 230 |
| | | | ○ | ○ | ○ | ○ | ○ | ○ | ○ | ○ | ○ | ○ |
| | Fuel resistance test | Tensile strength change rate (%) | -18 | -23 | -21 | -25 | -20 | -15 | -20 | -23 | -19 | -20 |
| | | | ○ | ○ | ○ | ○ | ○ | ○ | ○ | ○ | ○ | ○ |
| | | Elongation change rate (%) | -29 | -23 | -30 | -24 | -31 | -27 | -31 | -25 | -19 | -35 |
| | | | ○ | ○ | ○ | ○ | ○ | ○ | ○ | ○ | ○ | ○ |
| | Low-temperature test | Elongation (%) | 30 | 90 | 70 | 40 | 100 | 60 | 50 | 50 | 40 | 70 |
| | | | ○ | ○ | ○ | ○ | ○ | ○ | ○ | ○ | ○ | ○ |
| | Flame retardancy test | VFT test | ○ | ○ | ○ | ○ | ○ | ○ | ○ | ○ | ○ | ○ |
| | | VTFT test | ○ | ○ | ○ | ⊚ | ○ | ⊚ | ○ | ○ | ○ | ○ |

**[Table 2]**

| | Material name | Composition | Comparative Examples | | | | | | |
|---|---|---|---|---|---|---|---|---|---|
| | | | 1 | 2 | 3 | 4 | 5 | 6 | 7 |
| Polymer | EVA¹⁾ | Levapren 600 | 95 | | | 40 | 50 | 50 | 50 |
| | EVA²) | Levapren 800 | | | | | | | |
| | EVA³⁾ | V5274 | | 95 | | 35 | | 45 | 45 |
| | EVA⁴⁾ | P1007 | | | 95 | | | | |
| | EEA⁵⁾ | A1150 | | | | 20 | 45 | | |
| | Acid-modified polyolefin⁶⁾ | Maleic acid-modified polymer | 5 | 5 | 5 | 5 | 5 | 5 | 5 |
| Flame retardant | Magnesium hydroxide⁷⁾ | Magseeds S4 | 180 | 180 | 180 | 180 | 180 | 120 | 280 |
| Antioxidant⁸⁾ | | AO-18 | 1 | 1 | 1 | 1 | 1 | 1 | 1 |
| Colorant | Carbon black⁹⁾ | FT carbon | 2 | 2 | 2 | 2 | 2 | 2 | 2 |
| Lublican0¹⁰⁾ | | zinc stearate | 1 | 1 | 1 | 1 | 1 | 1 | 1 |
| Total | | | 284 | 284 | 284 | 284 | 284 | 224 | 384 |
| | | | | | | | | | |
| Electric wire characteristics | Initial tensile test | Tensile strength (Mpa) | 6.4 | 13.5 | 11.6 | 11.0 | 10.3 | 13.4 | 10.5 |
| | | | × | ○ | ○ | ○ | ○ | ○ | ○ |
| | | Elongation (%) | 150 | 90 | 210 | 210 | 190 | 280 | 120 |
| | | | ○ | × | ○ | ○ | ○ | ○ | × |
| | Fuel resistance test | Tensile strength change rate (%) | -21 | -15 | -50 | -41 | -38 | -22 | -25 |
| | | | ○ | ○ | × | × | × | ○ | ○ |
| | | Elongation change rate (%) | -30 | -10 | -45 | -41 | -38 | -29 | -31 |
| | | | ○ | ○ | × | × | ○ | ○ | ○ |
| | Low-temperature test | Elongation (%) | 10 | 40 | 50 | 70 | 50 | 90 | 20 |
| | | | × | ○ | ○ | ○ | ○ | ○ | × |
| | Flame retardancy test | VFT test | ○ | × | ○ | ○ | ○ | × | ○ |
| | | VTFT test | ○ | × | ○ | ○ | ○ | × | ⊚ |

| | | | | | | | | | |
|---|---|---|---|---|---|---|---|---|---|
| The unit of blending amounts shown in Table 1 and Table 2 is parts by mass. Materials shown in Table 1 and Table 2 are as below. • EVA¹⁾: "Levapren 600" manufactured by LANXESS (VA amount: 60% by mass, melting point: n/a) • EVA²⁾: "Levapren 800" manufactured by LANXESS (VA amount: 80% by mass, melting point: n/a) • EVA³⁾: "Evaflex (registered trademark) V5274" manufactured by Mitsui Du Pont Polychemical Co., Ltd. (VA amount: 17% by mass, melting point: 89°C) • EVA⁴⁾: "Evaflex P1007" manufactured by Mitsui Du Pont Polychemical Co., Ltd. (VA amount: 10% by mass, melting point: 94°C) • EEA⁵⁾: "REXPEARL A1150" manufactured by Japan Polyethylene Corporation (EA amount: 15% by mass, melting point: 100°C) • Acid-modified polyolefin⁶⁾: "TAFMER MH7020" manufactured by Mitsui Chemicals Inc. • Magnesium hydroxide⁷⁾: "Magseeds S4" manufactured by Konoshima Chemical Co., Ltd. • Antioxidant⁸⁾: "AO-18" manufactured by ADEKA Corporation • Carbon black⁹⁾: "FT carbon" manufactured by Asahi Carbon Co., Ltd. • Lubricant¹⁰⁾: "zinc stearate" manufactured by Nitto Chemical Co., Ltd. • EVA¹¹⁾: "Evaflex V9000" manufactured by Mitsui Du Pont Polychemical Co., Ltd. (VA amount: 41% by mass, melting point: n/a) • EVA¹²⁾: "Evaflex EV260" manufactured by Mitsui Du Pont Polychemical Co., Ltd. (VA amount: 28% by mass, melting point: 72°C) EVA¹⁾ and EVA²) correspond to the component (a). EVA³⁾, EVA⁴⁾, and EEA⁵⁾ correspond to the component (b). Acid-modified polyolefin⁶⁾ corresponds to the component (c). The EA amount means the ratio of the mass of ethyl acrylate with respect to the whole mass of the ethylene-ethyl acrylate copolymer. | | | | | | | | | |

Methods for preparing the halogen-free flame-retardant resin compositions of Examples 1 to 10 and Comparative Examples 1 to 7 are as below. The materials shown in Table 1 and Table 2 were weighed and kneaded with a pressure kneader to obtain pellets of the halogen-free flame-retardant resin compositions. In the kneading, the onset temperature was 40°C, and the end temperature was 190°C.

### (4-2) Production of Insulated Wires

Insulated wires were produced using the halogen-free flame-retardant resin compositions of Examples 1 to 10 and Comparative Examples 1 to 7. Methods for producing the insulated wires are as below.

A tinned copper stranded wire was prepared. The tinned copper stranded wire was composed of 37 strands each having a diameter of 0.18 mm. The outside diameter of the tinned copper stranded wire was 0.6 mm. Subsequently, the tinned copper stranded wire was coated with the halogen-free flame-retardant resin composition to form an insulating layer.

The halogen-free flame-retardant resin composition used was any one of those of Examples 1 to 10 and Comparative Examples 1 to 7. The thickness of the insulating layer was 0.6 mm. Next, the insulating layer was irradiated with an electron beam. The irradiation dose of the electron beam was 7.5 Mrad. The insulating layer was crosslinked to form a crosslinked product.

Through the aforementioned steps, the insulated wire 10 shown in FIG. 1 was obtained. The insulated wire 10 comprises the conductor 11 configured with the tinned copper stranded wire; and the insulating layer 12. The insulating layer 12 covers the conductor 11.

The insulated wire produced using the halogen-free flame-retardant resin composition of Example i (i is any of 1 to 10) is hereinafter referred to as an insulated wire of Example i. The insulated wire produced using the halogen-free flame-retardant resin composition of Comparative Example j (j is any of 1 to 7) is hereinafter referred to as an insulated wire of Comparative Example j.

### (4-3) Method for Evaluating Insulated Wires

The insulated wires of Examples 1 to 10 and Comparative Examples 1 to 7 were evaluated as below.

### (i) Initial Tensile Test

The conductor was removed from the insulated wire. As a result, a tubular insulating layer was obtained. This tubular insulating layer was used as a test piece. A tensile test was conducted on the test piece under a condition of a displacement speed of 250 mm/min, and a tensile strength and elongation were measured. Measurement results are shown in Table 1 and Table 2 above.

A case where the tensile strength was 10 MPa or more is indicated as "○" (good) in Table 1 and Table 2, and a case where the tensile strength was less than 10 MPa is indicated as "×" (poor) in Table 1 and Table 2.

The elongation of 150% or more is indicated as "○" (good) in Table 1 and Table 2, and the elongation of less than 150% is indicated as "×" (poor) in Table 1 and Table 2.

### (ii) Fuel Resistance Test

The test piece was prepared in the same manner as in the initial tensile test. The test piece was immersed in IRM903 heated to 70°C for 168 hours. Subsequently, the test piece was left at room temperature for around 16 hours. Then, the tensile strength and the elongation were measured in the same manner as in the initial tensile test.

Next, a change rate of the measured tensile strength with respect to the tensile strength measured in the initial tensile test was calculated (hereinafter referred to as a tensile strength change rate). Also, a change rate of the measured elongation with respect to the elongation measured in the initial tensile test was calculated (hereinafter referred to as an elongation change rate). The tensile strength change rate and the elongation change rate are shown in Table 1 and Table 2.

A case where the absolute value of the tensile strength change rate was 30% or less is indicated as "○" (good) in Table 1 and Table 2, and a case where the absolute value of the tensile strength change rate was more than 30% is indicated as "×" (poor) in Table 1 and Table 2.

A case where the absolute value of the elongation change rate was 40% or less is indicated as "○" (good) in Table 1 and Table 2, and a case where the absolute value of the elongation change rate was more than 40% is indicated as "×" (poor) in Table 1 and Table 2.

### (iii) Low-temperature Test

The test piece was prepared in the same manner as in the initial tensile test. A tensile test was conducted on the test piece at -40°C under a condition of a displacement speed of 30 mm/min, and elongation was measured. Measurement results are shown in Table 1 and Table 2.

A case where the elongation was 30% or more is indicated as "○" (good) in Table 1 and Table 2, and a case where the elongation was less than 30% is indicated as "×" (poor) in Table 1 and Table 2.

### (iv) Flame Retardancy Test

A vertical flame test (VFT) according to EN60332-1-2 was conducted. A specific test method is as below. The insulated wire having a length of 600 mm was held such that an axial direction thereof was vertical. Then, a flame was applied to the insulated wire for 60 seconds, and the flame was removed. A case where the fire was extinguished within 60 seconds was evaluated as "○" (good)", and a case where the fire was not extinguished even after 60 seconds was evaluated as "×" (poor). The evaluation results are shown in Table 1 and Table 2.

A vertical tray flame test (VTFT) according to EN50266-2-4 was conducted. A specific test method is as below. Seven insulated wires with a total length of 3.5 m were stranded together to form one bundle. Eleven bundles were arranged at equal intervals. An axial direction of each bundle was vertical. The eleven bundles were burned for 20 minutes. Then, the eleven bundles self-extinguished. After that, the char length of each of the eleven bundles was measured, and a case where the char length was 2.5 m or less was evaluated as "○" (good)", and a case where the char length was more than 2.5 m was evaluated as "×" (poor). ⊚ indicates a case where the flame retardancy was especially excellent. The evaluation results are shown in Table 1 and Table 2. The char length means a length of carbonization extending upward from a position where a flame of a burner is in contact.

### (4-4) Evaluation Results of Insulated Wires

The insulated wires of Examples 1 to 10 exhibited good results in all of the evaluation tests. The evaluation result of the low-temperature test of the insulated wire of Example 2 was much better than the insulated wire of Example 1. This is because the halogen-free flame-retardant resin composition of Examples 2 comprises the component (c).

Comparison of the evaluation results of the insulated wires of Examples 2 to 4 shows that the larger the content of the metal hydroxide in the halogen-free flame-retardant resin composition was, the better the evaluation result of the flame retardancy test was. On the other hand, the smaller the content of the metal hydroxide in the halogen-free flame-retardant resin composition was, the greater the elongation in the initial tensile test and the elongation in the low-temperature test were.

Comparison between the evaluation results of the insulated wires of Examples 5 and 6 shows that the larger the VA amount in EVA as the component (a) was, the better the evaluation results of the fuel resistance test and the flame retardancy test were. On the other hand, the smaller the VA amount in EVA as the component (a) was, the better the evaluation result of the low-temperature test was.

The insulated wires of Comparative Examples 1 to 7 exhibited insufficient results in any of the evaluation tests. Moreover, in the insulated wire of Comparative Example 1, tackiness of the insulating layer immediately after extrusion was excessively high, resulting in problems in production, too.

As is clear from Table 2, Comparative Example 3, in which neither the component (a) nor the component (b) was contained, was inferior in fuel resistance. Comparative Example 4 and Comparative Example 5, in which the ratio of the total mass of the component (a) and the component (b) with respect to the whole mass of the base polymer was less than 80% by mass, were inferior in fuel resistance.

Comparative Example 1, in which the component (b) was not contained, was inferior in low-temperature properties. Comparative Example 2, in which the component (a) was not contained, was inferior in flame retardancy.

Comparative Example 6, in which the content of the metal hydroxide was less than the range specified in the present disclosure, was inferior in flame retardancy. Comparative Example 7, in which the content of the metal hydroxide was more than the range specified in the present disclosure, was inferior in low-temperature properties.

### 5. Other Embodiments

Although the embodiments of the present disclosure have been described so far, the present disclosure is not limited to the aforementioned embodiments, and can be practiced in variously modified forms..
(1) The function(s) performed by a single element in the aforementioned embodiments may be performed by multiple elements. The function(s) performed by multiple elements may be performed by a single element. Part of the configuration of the aforementioned embodiments may be omitted. At least part of the configuration of the aforementioned embodiments may be added to or replaced by the configuration of the aforementioned other embodiments. All modes included in the technical idea specified by recitations in the accompanying claims are embodiments of the present disclosure.
(2) In addition to the aforementioned halogen-free flame-retardant resin composition, insulated wire, and cable, the present disclosure also can be achieved in various forms, such as a system having the insulated wire as an element, a system having the cable as an element, a method for preparing the halogen-free flame-retardant resin composition, a method for producing the insulated wire, and a method for producing the cable.

## Claims

1. A halogen-free flame-retardant resin composition comprising:
a base polymer; and
150 parts by mass or more and 250 parts by mass or less of a metal hydroxide with respect to 100 parts by mass of the base polymer,
wherein the base polymer comprises:
(a) an ethylene-vinyl acetate copolymer having a vinyl acetate content of 60% by mass or more; and
(b) a polyolefin polymer having a melting point of 85°C or higher, and
wherein a ratio of a total mass of (a) and (b) with respect to a whole mass of the base polymer is 80% by mass or more.

2. The halogen-free flame-retardant resin composition according to claim 1,
wherein the base polymer further comprises:
(c) an acid-modified polyolefin having a glass transition temperature of -55°C or lower, and
wherein a ratio of a mass of (c) with respect to a total mass of (a), (b), and (c) is 1% by mass or more and 20% by mass or less.

3. The halogen-free flame-retardant resin composition according to claim 1 or 2,
wherein the metal hydroxide comprises a magnesium hydroxide and/or an aluminum hydroxide, and
wherein (b) is an ethylene-vinyl acetate copolymer.

4. The halogen-free flame-retardant resin composition according to any one of claims 1 to 3,
wherein the halogen-free flame-retardant resin composition is crosslinked.

5. An insulated wire (10; 20) comprising an insulating layer (12),
wherein at least a part of the insulating layer (12) comprises a halogen-free flame-retardant resin composition according to any one of claims 1 to 4.

6. A cable (30) comprising a sheath (31),
wherein at least a part of the sheath (31) comprises a halogen-free flame-retardant resin composition according to any one of claims 1 to 4.
